# EUROPÄISCHE PATENTANMELDUNG

(11) **EP 1 001 294 A1**
(43) Veröffentlichungstag der Anmeldung: **17.05.2000**
(21) Anmeldenummer: 99402493.3
(22) Anmeldetag: 11.10.1999
(51) Int. Cl.: G02B 6/44

(54) **Lichtwellenleiter mit Schutzrohr**

(30) Priorität: 13.11.1998 DE 19852480; 15.01.1999 DE 19901354
(71) Anmelder: ALCATEL, 75008 Paris (FR)
(72) Erfinder: Hemken, Heinz Jürgen, 52134 Herzogenrath (DE); Scheideler, Wolfgang, Dr., 92705 Leuchtenberg (DE); Steinberg, Helmut, Dr., 92721 Störnstein (DE); Zamzow, Peter, 44795 Bochum (DE)
(74) Vertreter: Döring, Roger, Dipl.-Ing.

(57) **Zusammenfassung**

Vorgeschlagen wird ein Lichtwellenleiter, insbesondere für ein Fahrzeug, mit einer optischen Faser (1), die aus polymerem Material besteht, sowie mit einer Schutzlage, welche die Faser (1) umschließt.

Er zeichnet sich dadurch aus, daß die Schutzlage ein Rohr (2) aus Metall ist, das Rohr (2) eine Wellung im Winkel zu seiner Längsachse (4) aufweist, das Rohr (2) einen elektrischen Leiter bildet und mit einer außenseitigen Isolierung (5) versehen ist.

## Beschreibung

Die Erfindung bezieht sich auf einen Lichtwellenleiter, insbesondere für ein Fahrzeug, mit einer optischen Faser die aus polymerem Material besteht, sowie mit einer Schutzlage, welche die Faser umschließt.

Im Fahrzeugbau besteht das Problem, daß der zunehmende Einsatz elektrischer und elektronischer Komponenten in Fahrzeugen zu einem starken Anwachsen derzum Anschluß notwendigen Leitungen geführt hat. Um die Leitungslänge und ihr Gesamtgewicht zu verringern und den Aufbau sowie die Konfektionierung des Kabelbaums zu vereinfachen, sind daher Bussysteme entwickelt worden. Sie ermöglichen die Datenübertragung zwischen mehreren Komponenten über eine gemeinsame Leitung und reduzieren somit die erforderliche Leitungszahl.

Hohe Übertragungsraten lassen sich insbesondere durch Bussysteme mit Lichtwellenleitern erreichen, die mit optischen oder elektrooptischen Komponenten zusammenwirken. Die optischen Fasern der Lichtwellenleiter umfassen einen lichtleitenden Kern, der von einem Mantel zur Führung des Lichtes umschlossen ist, sowie ggf. eine oder mehrere äußere Schutzschichten. Im Fahrzeugbau erweisen sich Lichtwellenleiter aus polymeren optischen Fasern als vorteilhaft, etwa aus Polymethylmethacrylat (PMMA) und/oder fluoriertem PMMA. Geeignet sind z. B. Gradientenindexfasern mit einem Durchmesser von 1 mm. Gegenüber Glasfasern bieten sie die Vorteile mechanischer Robustheit, der einfachen Handhabbarkeit und Konfektionierung aufgrund des großen Durchmessers sowie die Möglichkeit des Betriebs mit sichtbarem Licht. Die im Vergleich zu Glas höhere Dämpfung ist dagegen bei den kurzen Übertragungswegen in Fahrzeugen von untergeordneter Bedeutung.

Als nachteilig erweist sich jedoch, daß zusätzliche Energieleitungen für die elektrische Spannungsversorgung der Sensoren und Aktuatoren notwendig sind. Zudem können die optischen Eigenschaften gebräuchlicher Polymerfasern durch Aufnahme von und chemische Reaktion mit Substanzen aus ihrer Umgebung erheblich beeinträchtigt oder zerstört werden. Neben den Betriebsflüssigkeiten, z. B. Schmiermitteln oder Kraftstoffen, ist die Vielzahl der in Fahrzeugen eingesetzten Kunststoffe problematisch, die beständig Substanzen abgeben, etwa nach Abschluß des Herstellungsprozesses ausgasende Edukte oder Treibmittel. Zudem ist in aller Regel ein guter Schutz der Fasern vor Feuchtigkeit und thermischen Belastungen, speziell beim Einsatz im Motorraum oder bei der Anbindung von Sensoren oder Aktuatoren außerhalb der Fahrgastzelle erforderlich. Die im Stande der Technik übliche Führung der Fasern in einer Schutzhülle oder einem Röhrchen aus Kunststoff ist für diese Zwecke unzureichend, da Polymere in der Regel nicht hinreichend gasdicht sind.

Weiterhin ist es bekannt, Metallrohre als Komponenten elektrischer Kabel mit einer Wellung zu versehen, um ihre Biegsamkeit und Querdruckstabilität zu verbessern. Die Wellung erfolgt im Winkel zur Längsachse des Rohres. Dabei sind sowohl schraubenförmige Wellungen mit im spitzen Winkel zur Rohrlängsachse verlaufenden Wellenkämmen als auch rechtwinklig zur Achse ausgerichtete Wellungen aus geschlossenen Ringen gebräuchlich. Durch Variation von Tiefe und Abstand der Wellen lassen sich die mechanischen Eigenschaften des Rohres, etwa die Biegsamkeit, in weiten Grenzen einstellen.

Vor diesem Hintergrund hat sich die Erfindung zur Aufgabe gestellt einen Lichtwellenleiter zu entwickeln, der sicher vor Umwelteinflüssen geschützt ist und eine einfache Verbindung von signalverarbeitenden Kömponenten mit einer minimalen Zahl von Leitungen ermöglicht

Diese Aufgabe wird erfindungsgemäß dadurch gelöst, daß die Schutzlage ein Rohr aus Metall ist, das Rohr eine Wellung im Winkel zu seiner Längsachse aufweist, das Rohr einen elektrischen Leiter bildet und mit einer außenseitigen Isolierung versehen ist.

Bei der Erfindung wird im Lichtwellenleiter eine polymeroptische Faser verwendet, etwa eine Gradientenindex- oder Stufenindexfaser, die aus PMMA, fluoriertem PMMA oder einem anderen Kunststoff mit geeigneten optischen Eigenschaften besteht Der Außendurchmesser der Faser beträgt bevorzugt etwa 1 mm, wobei der Kemdurchmesser den Manteldurchmesser meist deutlich übersteigt, so daß die einfache Lichteinkopplung und Verbindung der Faser gewährleistet ist Denkbar ist sowohl, die Faser bei einer einzelnen Wellenlänge zu betreiben als auch mehrere unterschiedliche Lichtwellenlängen über eine Faser zu übertragen.

Die Faser ist umlaufend von einem Wellrohr aus Metall umschlossen, dessen Wellung z. B. aus geschlossenen Ringen oder schraubenförmig ausgebildet ist. Tiefe und Periode der Wellung sind derart eingestellt, daß die elastischen Eigenschaften des Metalls einen sicheren Schutz der Faser sowohl vor radialen als auch axialen Belastungen gewährleisten. Die Faser liegt dabei frei im Rohr, dessen Innendurchmesser den Faserdurchmesser übersteigt Daher ist eine Kraftübertragung von axial auf das Rohr wirkenden Zugbelastungen auf die Faser ausgeschlossen. Die Wellung ermöglicht eine hohe Biegsamkeit des Rohres mit einem vorgegebenen minimalen Biegeradius, der ein Abknicken der Faser und damit eine Beeinträchtigung ihrer optischen Eigenschaften ausschließt Bevorzugt beträgt der minimale Biegeradius des Rohres zumindest das 10-fache des Faserdurchmessers. Weiterhin bildet das Metallrohr eine dampfdichte Sperrschicht um die Faser, die Schädigungen durch Lösungsmittel oder gasförmige Substanzen aus der Umgebung ausschließt. Denkbar ist, innerhalb des Rohres eine gelförmige oder flüssige Füllmasse mit beispielsweise hydrophoben oder Schadstoffabsorbierenden Eigenschaften vorzusehen, in welche die Faser eingebettet ist

Außenseitig ist das Metallrohr mit einer elektrischen Isolierung versehen, beispielsweise einer Schicht aus einem Polymer, etwa einem Polyolefin wie z. B. Polyethylen. Neben kompakten Polymeren sind auch geschäumte Werkstoffe für die Isolierung geeignet, etwa ein Polyurethanschaum. Zweckmäßig ist es, für die Isolierung sowie für einen ggf. vorhandenen äußeren Mantel halogenfreie und/ oder schwer entflammbare Materialien zu verwenden, um die Sicherheit im Brandfall zu verbessern. Mit der Isolierung entsteht ein elektrischer Leiter, der insbesondere zur Energieversorgung derjenigen Komponenten dient, die mit der optischen Faser verbunden sind. Somit bildet der Lichtwellenleiter mit seinem Schutzrohr ein Hybridkabel, das gleichzeitig zur Energie- und Datenübertragung geeignet ist Grundsätzlich ist es auch möglich, elektrische Signale über das Wellrohr zu übertragen. Als Material des Rohres sind insbesondere gut leitfähige Metalle, wie Kupfer oder Aluminium, geeignet oder - in Abhängigkeit von den gewünschten elektrischen und mechanischen Eigenschaften - Legierungen, etwa Messing oder Bronze. Sofern die mechanische Festigkeit im Vordergrund steht, ist grundsätzlich auch Stahl denkbar. Dabei verhindert die elektrische Isolierung eine Kontaktkorrosion mit Karosserie- oder andereren Trägerteilen, auf denen der Leiter verlegt ist. Die Wandstärke des Metallrohres beträgt zweckmäßig 100 µm bis einige 100 µm, wobei ein für die Stromübertragung hinreichender Leitungsquerschnitt der Wandung notwendig ist, der vorzugsweise im Bereich eines bis einiger mm² liegt.

Der vorgeschlagene Lichtwellenleiter zeichnet sich durch einen sicheren Schutz der optischen Faser gegenüber Umwelteinflüssen, wie mechanischen Belastungen in Querund Längsrichtung, hohen Temperaturen, chemischen Substanzen und Vibrationen aus. Weiterhin ist ein guter Nagetierschutz gegeben. Wechselwirkungen der übertragenen Signale mit äußeren elektromagnetischen Feldern sind dagegen ausgeschlossen. Die Handhabung des Lichtwellenleiters ist einfach, wobei das Metallrohr die Polymerfaser vor Beschädigung bei der Verarbeitung und Verlegung schützt.

Der Lichtwellenleiter ist für die Verbindung von Komponenten bevorzugt, die sowohl eine elektrische Energieversorgung als auch eine optische Signalübertragung erfordern. Denkbar ist sein Einsatz insbesondere in modularen Systemen, wobei ein Multiplexbetrieb des Lichtwellenleiters bei mehreren Wellenlängen von Vorteil ist. Neben dem Fahrzeugbau, beispielsweise dem Kraftfahrzeug-, Flugzeug- oder Schiffbau, ist der Einsatz auch in anderen kleinräumigen Bereichen zweckmäßig, die einen besonderen Schutz des Lichtwellenleiters erfordern, etwa im Maschinenbau oder chemischen Anlagen. Speziell im Fahrzeugbau ist es sowohl möglich, den erfindungsgemäßen Lichtwellenleiter für die Verbindung von Informationssystemen einzusetzen, z. B. Telefon, Radio oder Navigationssystemen, als auch in Steuerungssystemen mit Sensoren und Aktuatoren. Die verwendeten Netzstrukturen sind dabei beliebig und können beispielsweise ring- oder sternförmig sein.

In einer vorteilhaften Ausgestaltung der Erfindung beträgt der Außendurchmesser des gewellten Metallrohres bis zu 6 mm, vorzugsweise 2-4 mm. Auf diese Weise ist eine gute Flexibilität des Rohres bei hoher radialer Belastbarkeit und hinreichendem elektrischen Leitungsquerschnitt erreichbar. Entsprechend vereinfacht sich die Handhabung des Lichtwellenleiters. Vorzugsweise umschließt das Metallrohr dabei eine einzelne optische Faser.

Als Schutzrohr bietet sich aufgrund der einfachen Fertigung ein längsnahtgeschweißtes Metallrohr an. Seine Herstellung erfolgt bevorzugt, indem ein Metallband um die optische Ader zu einem Rohr geformt wird, dessen Innendurchmesser den Außendurchmesser der Ader übersteigt. Nachfolgend wird das Rohr entlang seiner Kanten verschweißt, wozu speziell eine Laserverschweißung geeignet ist. Abschließend erfolgen die Wellung des Rohres und seine Isolierung.

Vielfach ist es zweckmäßig, daß die optische Faser mit einer äußeren Schutzhülle aus polymerem Material versehen ist, die den Fasermantel umschließt und in der Regel daran anliegt. Von Vorteil sind insbesondere lichtabsorbierende Schutzhüllen, die eine Störung der übertragenen Signale durch Lichteinfall in den Bereichen vermeiden, in denen die Faser aus dem Metallrohr herausgeführt ist. Weiterhin bildet die Schutzhülle einen mechanischen Schutz der Faser sowohl in Bereichen, in denen sie aus dem Metallrohr herausgeführt ist, als auch gegenüber Abrieb in dessen Innerem, etwa im Fall häufiger Vibrationen.

Da die optische Faser im Inneren des Rohres sicher geschützt ist, kann der Hybridleiter wie ein herkömmlicher elektrischer Leiter gehandhabt werden. Sowohl das Metallrohr als auch seine Isolierung läßt sich wasserdicht und/oder ortsfest mit Verbindungselementen verbinden. Zu Verbindungselementen zählen sämtliche Komponenten, die bei der Konfektionierung am Leiter fixiert werden. Beispiele sind elektrische Verbinder, optische Verbinder oder Hybridverbinder für die Leiter, Dichtungen oder Tüllen zur Durchführung durch Wandungen, etwa zwischen dem Motorraum und dem Fahrgastraum eines Kraftfahrzeuges, oder Befestigungselemente zur Anbringung oder Zugentlastung. Geeignete Verfahren zur wasserdichten bzw. ortsfesten Verbindung sind zum Beispiel Verschweißen, Verlöten, Crimpen, Verkleben, Angießen oder Anspritzen oder die Verwendung von federnden oder Klemmverbindungen, z. B. Schneidklemmverbindungen. Auch die elektrische Verbindung des Wellrohres mit anderen Komponenten läßt sich auf diese Weise herstellen.

Bevorzugt ist das Schutzrohr endseitig mit einem Abschlußstück versehen, das eine Öffnung zum Herausführen der optischen Faser aufweist. Zweckmäßig weist die Öffnung einen größeren Durchmesser als die Faser auf, so daß ein Spalt zwischen beiden vorhanden ist. Bei Bedarf ist ein Verschließen des Spaltes, etwa mit einer Vergußmasse, möglich. Das Abschlußstück vereinfacht eine mechanische Festlegung des Schutzrohres sowie dessen elektrische Kontaktierung, sofern es aus einem leitfähigen Werkstoff, insbesondere einem Metall besteht. Zur Fixierung bietet es sich an, das Abschlußstück auf das Schutzrohr zu crimpen. Bei spiralförmiger Wellung des Rohres ist auch ein Innen- oder Außengewinde auf dem Abschlußstück von Vorteil, mit dem es sich auf die Wellung des Schutzrohres aufschrauben bzw. in dessen Öffnung einschrauben läßt.

Bevorzugt umfaßt ein Kabel mit dem erfindungsgemäßen Lichtwellenleiter zumindest einen weiteren, gegen das Schutzrohr des Lichtwellenleiters isolierten, elektrischen Leiter. Er eignet sich als elektrische Rückleitung, wenn die Karosserie, ein Rahmen oder Trägerkörper eines Fahrzeuges bzw. einer Vorrichtung als elektrische Rückleitung ungeeignet ist, also etwa bei Fahrzeugen mit einer Kunststoffkarosserie. Ebenso lassen sich einem Verbraucher auf diese Weise unterschiedliche Versorgungsspannungen zuführen, so daß beispielsweise Kraftfahrzeugbordnetze mit mehreren Spannungen möglich sind. Als Material der Leiter sind zum Beispiel Metalle wie Kupfer oder Aluminium geeignet Im einfachsten Fall sind der oder die weiteren Leiter Drähte oder Litzen.

Als zweckmäßig erweist sich die Anordnung des weiteren Leiters im Inneren des Rohres. Auf diese Weise entsteht ein Kabel mit geringem Querschnitt. Alternativ besteht die Möglichkeit, das Schutzrohr des Lichtwellenleiters und die weiteren elektrischen Leiter parallel in einem gemeinsamen Mantel zu führen.

Besonders geeignet als weiterer Leiter ist ein Rohr. Vorzugsweise verläuft es koaxial zum Schutzrohr des Lichtwellenleiters. In diesem Fall wird die optische Faser von beiden Rohren umschlossen, so daß sich ihr Schutz verbessert. Als inneres Rohr ist ein Rohr mit glatter Oberfläche denkbar, da die Biegsamkeit des Kabels insbesondere durch die mechanischen Eigenschaften des äußeren Rohres bestimmt wird. Damit ist ein besonders geringer Querschnitt des Kabels erreichbar. Weiterhin kann eines, vorzugsweise das innere Rohr, einen offenen Längsspalt aufweisen, um die Fertigung zu vereinfachen. Die mechanische Stabilität und radiale Gasdichtigkeit wird dabei sichergestellt, indem das andere Rohr, etwa durch Verschweißung, umlaufend geschlossen ist.

Um eine hohe Flexibilität des Kabels zu erzielen, werden sowohl für das Schutzrohr als auch für den oder die weiteren Leiter Wellrohre verwendet.

Zur gegenseitigen Isolierung der elektrischen Leiter sind neben kompakten Materialien auch Schaumstoffe geeignet, wobei durch physikalische Mischung hergestellte Schäume, zum Beispiel ein Polypropylenschaum, oder durch chemische Reaktion erzeugte Schaumstoffe verwendbar sind. Schaumstoffisolierungen reduzieren das Gewicht des Kabels bei günstigen elektrischen Eigenschaften. Sie bieten sich speziell als gegenseitige Isolierung koaxial ineinander verlaufender Rohre an.

In vielen Fällen ist es vorteilhaft, daß ein Kabel zumindest zwei polymeroptische Fasern mit jeweils einem Schutzrohr umfaßt. Auf diese Weise ist es beispielsweise möglich, aus Sicherheitsgründen voneinander unabhängige optische Leiter gemeinsam zu führen. Ferner lassen sich durch gegeneinander isolierte Schutzrohre unterschiedliche Versorgungsspannungen zu einem Verbraucher leiten oder eine Hin- und Rückleitung zur Spannungsquelle herstellen. Sind mehr als zwei Schutzrohre miteinander verbunden, ist ihre Anordnung in einer Ebene zweckmäßig, um die Biegsamkeit des Kabels zu erhalten. Zur Verbindung der Rohre bietet es sich an, ihre Isolierungen miteinander zu verkleben, einen gemeinsamen Mantel um die Isolierungen zu extrudieren oder eine zusammenhängende Isolierung um die Schutzrohre zu extrudieren. Zweckmäßig ist eine Einkerbung oder Engstelle, die im Mantel bzw. der Isolierung zwischen den Schutzrohren angeordnet ist und ihre Trennung erleichtert.

Obwohl der erfindungsgemäße Lichtwellenleiter auch zur Verbindung einzelner Komponenten geeignet ist, wird insbesondere vorgeschlagen, ihn als Bestandteil des Kabelbaums einer Vorrichtung oder eines Fahrzeuges einzusetzen. Damit lassen sich sowohl das Gesamtgewicht als auch die Gesamtlänge der Adern des Kabelbaums erheblich verringern.

Zur Verbindung der optischen Fasern von erfindungsgemäßen Lichtwellenleitern untereinander ist ein optischer Koppler zweckmäßig. Von Vorteil sind speziell Stemkoppler, welche die Verbindung mehrerer Lichtwellenleiter untereinander gestatten.

Um bei längeren Übertragungswegen oder der Kopplung mehrerer Lichtwellenleiter eine hinreichende Signalintensität zu gewährleisten, ist ein Koppler mit einem optisch aktiven Koppelmedium von Vorteil, das eine Verstärkung der optischen Signale bewirkt.

Der Koppler bietet sich auch für die Kontaktierung, speziell die Spannungsversorgung der elektrischen Leiter des Lichtwellenleiters an. Diese Ausgestaltung ist insbesondere bei einem aktiven Koppler zweckmäßig, der eine Spannungsversorgung des optischen Verstärkers erfordert. Daneben ermöglichen miteinander verbundene Kontakte des Kopplers die Verbindung der elektrischen Leiter untereinander. Auf diese Weise ist lediglich ein elektrischer Anschluß für in unterschiedlichen Lichtwellenleitern geführte elektrische Leiter erforderlich. Bevorzugt umfaßt der Koppler entsprechend der Ausgestaltung der elektrischen Leiter eine Spannungsversorgung sowie gegebenenfalls einen Masseanschluß und weitere Spannungsversorgungen mit unterschiedlichem Potential.

Im folgenden Beschreibungsteil sind Ausführungsbeispiele der Erfindung näher erläutert. Die Zeichnung zeigt in prinzipienhafter Darstellung
Fig. 1: Angeschnittene Ansicht eines erfindungsgemäßen Lichtwellenleiters.
Fig. 2: Querschnitte durch unterschiedliche Kabel mit erfindungsgemäßen Lichtwellenleitern.
Fig.3: Querschnitte durch unterschiedliche Kabel mit mehreren elektrischen Leitern.
Fig. 4: Ansicht eines Sternkopplers für den erfindungsgemäßen Lichtwellenleiter.
Fig. 5: Angeschnittene Ansicht eines weiteren erfindungsgemäßen Lichtwellenleiters.

Der Lichtwellenleiter umfaßt eine optische Faser 1 mit einem Kern und einem Mantel aus polymerem Material sowie ein Rohr 2 aus Metall, das einen mechanischen Schutz der Faser 1 und einen elektrischen Leiter bildet Die Wandung des Rohres 2 ist zur radialen Aussteifung und Verbesserung der Biegsamkeit gewellt, wobei die Wellung in Form einer Schraubenlinie 3 um die Achse 4 des Lichtwellenleiters verläuft. Außenseitig ist das Rohr 2 mit einer Isolierung 5 versehen, etwa einer Schicht aus Polyethylen. Sie verhindert Kurzschlüsse zwischen dem Rohr 2 und einem Trägerteil, etwa dem Karosserieteil eines Fahrzeuges, auf dem es verlegt ist

Endseitig ist das Rohr 2 mit einem Abschlußstück 6 verbunden, das beispielsweise aufgecrimpt oder mit der schraubenlinienförmigen Wellung verschraubt ist Es besteht gleichfalls aus Metall und dient zur mechanischen Festlegung und elektrischen Kontaktierung des Rohres 2. Eine zentrale Öffnung 7 ermöglicht es, die Faser 1 zum Anschluß an andere Komponenten aus dem Rohr 2 herauszuführen. Dabei verhindert eine Schutzhülle 8 aus einem lichtundurchlässigen Polymer, daß eine Beschädigung der Faser 1 oder ein Lichteinfall in diesen Bereich erfolgt. Auch im Inneren des Rohrs 2 ist eine Schutzhülle 8 zweckmäßig, um einen Abrieb der Faser 1 zu vermeiden.

Eine gestrichelt dargestellte Umspritzung 9 verbindet das Abschlußstück 6 feuchtigkeitsdicht mit der Isolierung 5. Ebenso ist es möglich, auf diese Weise Elemente eines Steckerverbinders, etwa Vorsprünge zur Führung oder Verrieglung, anzuformen.

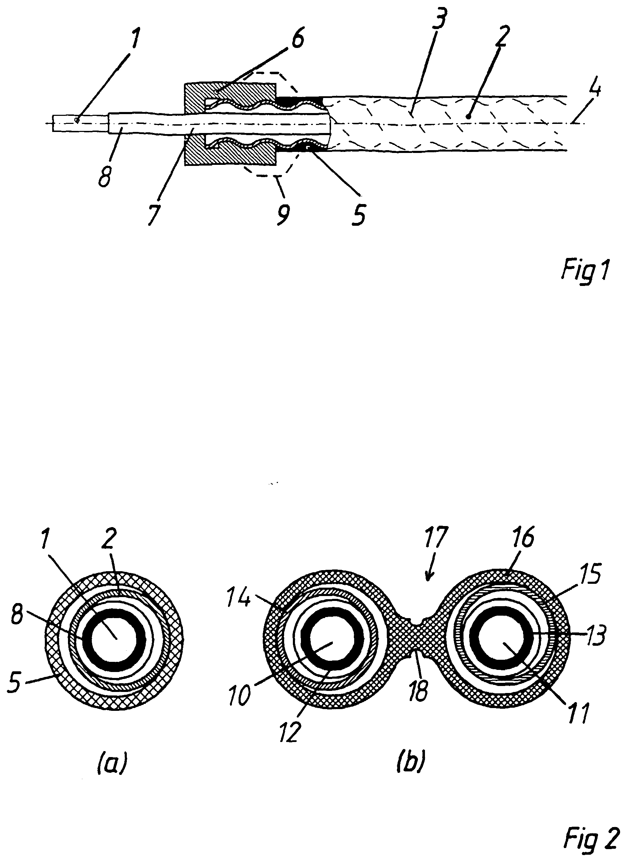

Fig. 2a zeigt einen Querschnitt durch den Lichtwellenleiter in Fig. 1. Erkennbar sind die zentrale Faser 1 mit ihrer Schutzhülle 8, das Rohr 2 und die äußere Isolierung 5.

Fig. 2b gibt den Querschnitt durch ein Hybridkabel wieder, das zwei Lichtwellenleiter mit den optischen Fasern 10, 11 umfaßt. Sie befinden sich jeweils in einer Schutzhülle 12, 13 und sind in Metallrohren 14, 15 angeordnet. Beide Rohre 14, 15 werden von einer gemeinsamen Isolierung 16 umschlossen. Eine Engstelle 17 mit einer Kerbe 18 ermöglicht die einfache Trennung beider Lichtwellenleiter. Mit dem dargestellten Hybridkabel können einer angeschlossenen elektrooptischen Komponente unterschiedliche Versorgungsspannungen über die beiden gegeneinander isolierten Rohre 14, 15 zugeführt werden. Dabei gestatten es die beiden Fasern 10,11, zwei voneinander unabhängige Systeme zur optischen Datenübertragung vorzusehen, beispielsweise um die Sicherheit zu erhöhen.

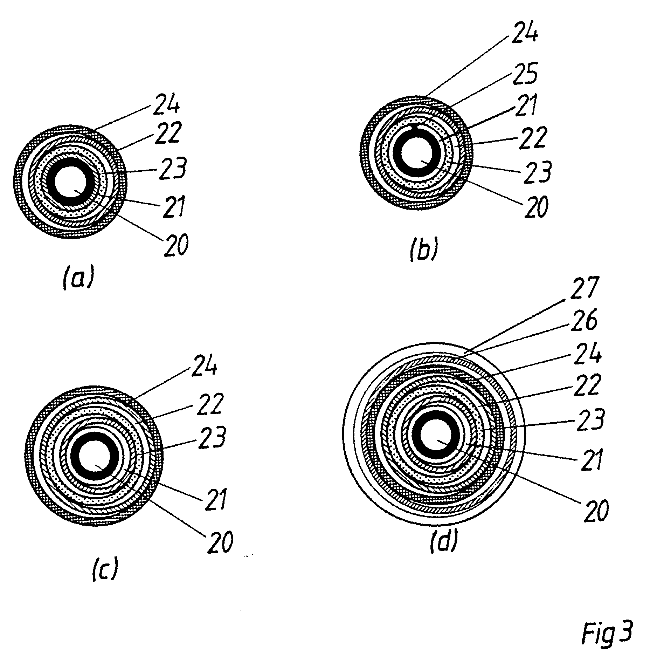

In Fig. 3 sind Querschnitte durch Hybridkabel mit mehreren elektrischen Leitern dargestellt. Die Kabel in den Teilbildern (a) und (b) bestehen bei einem Durchmesser von beispielsweise 3-4 mm jeweils aus einer polymeren optischen Faser 20, in einem glatten inneren Rohr 21, das koaxial in einem äußeren Wellrohr 22 geführt ist Beide Rohre 21, 22 bestehen aus Metall und dienen als elektrische Leiter, die durch eine dazwischen angeordnete geschäumte oder kompakte Isolierung 23 voneinander beabstandet sind. Außenseitig ist das Rohr 22 gleichfalls mit einer Isolierung 24 versehen.

Da das äußere Rohr 22 bereits einen mechanischen Schutz und gasdichten Abschluß der Faser 20 von der Umgebung sicherstellt, kann das innere Rohr 21 einen offenen Längsspalt 25 aufweisen. Somit läßt es sich durch mechanische Formung auf einfache Weise aus einem Metallband herstellen, ohne daß die Notwendigkeit besteht, den Längsspalt 25, etwa durch Verschweißung, zu verschließen. Durch Verwendung zweier umlaufend geschlossener Rohre 21, 22 läßt sich jedoch der Schutz der Faser 20 verbessern.

Fig. 3c zeigt eine Ausgestaltung des Hybridkabels mit zwei gewellten Metallrohren 21, 22. Auf diese Weise ist auch bei größeren Durchmessern des Kabels eine gute Flexibilität erreichbar.

Bei dem in Fig. 3d dargestellten Kabel sind drei konzentrische Wellrohre 21, 22, 26 vorhanden, zwischen denen sich Isolierungen 23, 24 befinden. Sie gestatten es, einem Verbraucher zwei unterschiedliche Versorgungsspannungen, beispielsweise von 12V und 42V, über die Wellrohre 21, 22 zuzuführen. Das äußere Wellrohr 26 befindet sich bevorzugt auf dem elektrischen Potential der Karosserie eines Fahrzeuges bzw. des Rahmens einer Vorrichtung und dient als Rückleitung. In diesem Fall kann auf einen äußeren Mantel 27 verzichtet werden, während sich ein derartiger Mantel 27 bei Korrosionsgefahr oder abweichendem Potential des Wellrohres 26 als zweckmäßig erweist.

Im Ergebnis entstehen auf diese Weise Hybridkabel, die eine wesentliche Vereinfachung der Verkabelung von Kraftfahrzeugen bei gleichzeitiger Gewichtseinsparung und dauerhafter Funktionssicherheit ermöglichen.

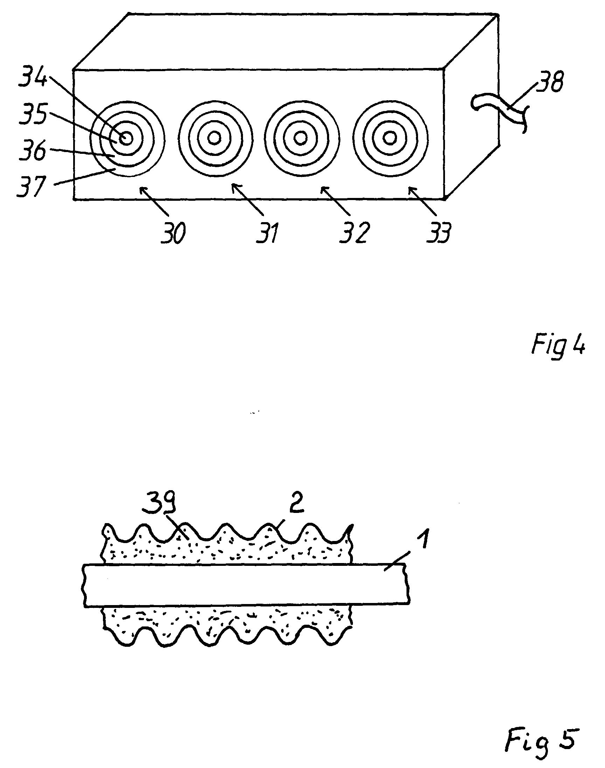

Bevorzugt werden die erfindungsgemäßen Lichtwellenleiter mit einem Sternkoppler verbunden, wie er in Figur 4 dargestellt ist. Der Koppler umfaßt mehrere, im Beispiel vier Anschlüsse 30 - 33, die jeweils mit einem erfindungsgemäßen Lichtwellenleiter verbindbar sind. Im Zentrum jedes Anschlusses 30 - 33 ist ein optisches Koppelelement 34, etwa eine Linse, vorhanden, welches die Ein- und Auskopplung von Licht in die Faser 1 ermöglicht Die Koppelelemente 34 sämtlicher Anschlüsse sind untereinander durch einen optischen Sternkoppler, vorzugsweise mit einem optischen Verstärkungsmedium, verbunden.

Das Koppelelement 34 ist jeweils von drei elektrischen Kontakten 35 - 37 konzentrisch umgeben. Beispielsweise dient der innere Kontakt 35 zur Verbindung eines elektrischen Leiters mit einer ersten Versorgungsspannung (z.B. 12 V), der Kontakt 35 zur Verbindung eines zweiten elektrischen Leiters mit einer zweiten Versorgungsspannung (z.B. 42 V) und der Kontakt 37 als Massekontakt. Gleichartige Kontakte 35 - 37 aller Anschlüsse 30 - 33 sind untereinander elektrisch verbunden. Zweckmäßig ist es, die Kontakte 35 - 37 als Steckkontakte auszubilden, in die beispielsweise das Abschlußstück eines Lichtwellenleiters einschiebbar ist Alternativ ist denkbar, daß die Kontakte 35 - 37 als Gewinde ausgebildet sind, in die sich ein Abschlußstück oder ein spiralgewellter elektrischer Leiter eines Lichtwellenleiters einschrauben läßt Zweckmäßig bildet der Koppler den Anschluß für sämtliche elektrischen Leiter der Lichtwellenleiter an die Spannungsversorgung, die über eine elektrische Zuleitung 38 des Kopplers erfolgt.

In Figur 5 ist ein weiteres Ausführungsbeispiel eines Lichtwellenleiters gemäß der Lehre der Erfindung dargestellt. Zwischen der Faser 1 und dem Rohr 2 ist eine Schicht 39 aus einem aufgeschäumten Kunststoff vorgesehen. Die Schaumstoffschicht 39 besteht aus Polyethylen, Polypropylen oder einem anderen temperaturbeständigen Kunststoff. Der Aufschäumgrad sollte über 50 % vorzugsweise bis zu 85 % befragen. Die Wanddicke der Schaumstoffschicht 39 beträgt vorzugsweise 0,3 bis 2,0 mm. Der wesentliche Vorteil der Schaumstoffschicht ist darin zu sehen, daß es gelungen ist, den Lichtwellenleiter bei Umgebungstemperaturen bis zu 130 °C einzusetzen. Die Schaumstoffschicht bildet darüberhinaus ein Polster für die Faser. Hierzu ist es von Vorteil, wenn der Schaumstoff eine weiche mechanische Charakteristik aufweist, die zu keiner Dämpfungserhöhung bei der Faser führt. Sie gewährleistet, daß mechanische Kräfte weder in radialer noch in axialer Richtung auf die Faser einwirken.

Die Herstellung erfolgt vorteilhafterweise durch Extrusion einer aufschäumbaren Kunststoffschicht auf die Faser, wobei der Aufschäumvorgang chemisch oder physikalisch durchgeführt wird. Nach dem Aufschäumen wird ein Metallband längseinlaufend um die mit der Schaumstoffschicht 39 versehene Faser 1 herum zu einem Rohr mit Längsschlitz geformt. Nach dem Verschweißen des Längsschlitzes kann das Rohr auf einen geringen Durchmesser heruntergezogen werden und wird anschließend im selben Arbeitsgang mit einer ring- oder schraubenlinienförmigen Wellung versehen. Abschließend kann noch ein Kunststoffmantel auf das gewellte Rohr extrudiert werden.

## Patentansprüche

1. Lichtwellenleiter, insbesondere für ein Fahrzeug, mit einer optischen Faser (1), die aus polymerem Material besteht, sowie mit einer Schutzlage, welche die Faser (1) umschließt, **dadurch gekennzeichnet,** daß
die Schutzlage ein Rohr (2) aus Metall ist,
das Rohr (2) eine Wellung im Winkel zu seiner Längsachse (4) aufweist,
das Rohr (2) einen elektrischen Leiter bildet und mit einer außenseitigen Isolierung (5) versehen ist.

2. Lichtwellenleiter nach Anspruch 1**, dadurch gekennzeichnet,** daß der maximale Außendurchmesser des Rohres (2) bis zu 6 mm, vorzugsweise 2 mm bis 4 mm beträgt.

3. Lichtwellenleiter nach Anspruch 1 oder 2, **dadurch gekennzeichnet,** daß das Rohr (2) aus einem längsnahtverschweißten Metallband besteht.

4. Lichtwellenleiter nach einem der vorhergehenden Ansprüche, **dadurch gekennzeichnet,** daß die Wellung eine Spiral- oder Ringwellung ist.

5. Lichtwellenleiter nach einem der vorhergehenden Ansprüche, **dadurch gekennzeichnet**, daß die optische Faser (1) eine Schutzhülle (8) aus polymerem Material aufweist.

6. Lichtwellenleiter nach einem der vorhergehenden Ansprüche, **dadurch gekennzeichnet,** daß der zwischen der Faser (1) und dem Rohr (2) befindliche Raum mit einem Schaumstoff ausgefüllt ist.

7. Lichtwellenleiter nach Anspruch 6, **dadurch gekennzeichnet**, daß der Schaumstoff einen Schäumgrad von 50 % bis 85 % aufweist.

8. Lichtwellenleiter nach einem der Ansprüche 6 bis 7, **dadurch gekennzeichnet,** daß der Schaumstoff aus einem Polymer besteht, vorzugsweise ein Polypropylenschaum ist.

9. Lichtwellenleiter nach einem der Ansprüche 6 bis 8, **dadurch gekennzeichnet**, daß die Wanddicke der Schaumstoffschicht zwischen 0,2 und 2 mm beträgt.

10. Lichtwellenleiter nach einem der Ansprüche 6 bis 8, **dadurch gekennzeichnet**, daß der Schaumstoff eine weiche mechanische Charakteristik aufweist.

11. Lichtwellenleiter nach einem der vorhergehenden Ansprüche, **dadurch gekennzeichnet,** daß ein Verbindungselement wasserdicht und/oder ortsfest am Rohr (2) und/oder der Isolierung (5) angebracht ist.

12. Lichtwellenleiter nach Anspruch 11, **dadurch gekennzeichnet,** daß das Rohr (2) endseitig mit einem Abschlußstück (6) versehen ist, das eine Öffnung (7) aufweist, durch die die Faser (1) verläuft.

13. Lichtwellenleiter nach Anspruch 12, **dadurch gekennzeichnet**, daß das Abschlußstück (6) aus Metall besteht.

14. Lichtwellenleiter nach Anspruch 12 oder 13, **dadurch gekennzeichnet,** daß das Abschlußstück (6) auf das Rohr (2) gecrimpt oder mit dessen Wellung verschraubt ist.

15. Lichtwellenleiter nach einem der vorhergehenden Ansprüche, **dadurch gekennzeichnet,** daß der Lichtwellenleiter Element eines Kabels ist, das zumindest einen zweiten elektrischen Leiter umfaßt.

16. Lichtwellenleiter nach Anspruch 15, **dadurch gekennzeichnet,** daß der zweite Leiter im Inneren des Rohres (2) angeordnet ist.

17. Lichtwellenleiter nach Anspruch 15 oder 16, **dadurch gekennzeichnet**, daß der zweite Leiter ein Rohr (21) ist.

18. Lichtwellenleiter nach Anspruch 17, **dadurch gekennzeichnet**, daß der zweite Leiter ein gewelltes Rohr (21) ist.

19. Lichtweltenleiter nach einem der Ansprüche 15 bis 18, **dadurch gekennzeichnet,** daß die Leiter durch eine Schaumstoffschicht gegeneinander isoliert sind.

20. Lichtwellenleiter nach einem der Ansprüche 17 bis 19, **dadurch gekennzeichnet,** daß ein Kabel zumindest zwei optische Fasern (1) in jeweils einem Rohr (2) umfaßt.

21. Lichtwellenleiter nach einem der vorhergehenden Ansprüche, **dadurch gekennzeichnet**, daß der Lichtwellenleiter Bestandteil des Kabelbaums eines Fahrzeuges oder einer Vorrichtung ist.

22. Lichtwellenleiter nach einem der vorhergehenden Ansprüche, **dadurch gekennzeichnet,** daß zumindest zwei Lichtwellenleiter vorhanden sind, die mit einem optischen Koppler verbunden sind.

23. Lichtwellenleiter nach Anspruch 22, **dadurch gekennzeichnet**, daß der Koppler einen optischen Verstärker umfaßt.

24. Lichtwellenleiter nach Anspruch 22 oder 23, **dadurch gekennzeichnet,** daß der Koppler einen elektrischen Kontakt (35 - 37) umfaßt, der mit einem der elektrischen Leiter verbunden ist.

25. Lichtwellenleiter nach Anspruch 24, **dadurch gekennzeichnet,** daß der Koppler die Spannungsversorgung des elektrischen Leiters bildet.

26. Lichtwellenleiter nach Anspruch 24 oder 25, **dadurch gekennzeichnet,** daß der Koppler die elektrischen Leiter unterschiedlicher Lichtwellenleiter verbindet.
